# EUROPÄISCHE PATENTSCHRIFT

(11) **EP 0 982 593 B1**
(45) Veröffentlichungstag und Bekanntmachung des Hinweises auf die Patenterteilung: **07.12.2005**
(21) Anmeldenummer: 98115395.0
(22) Anmeldetag: 17.08.1998
(51) Int. Cl.: G01N 35/10

(54) **Verfahren zur Ueberwachung von Pipettiervorgängen**
Method for monitoring pipetting operations
Méthode de contrôle des procédés de pipettage

(43) Veröffentlichungstag der Anmeldung: 01.03.2000
(73) Patentinhaber: F. HOFFMANN-LA ROCHE AG, 4070 Basel (CH)
(72) Erfinder: Burkhardt, Claudius, 6003 Luzern (CH); Gödl, Fritz, 6343 Rotkreuz (CH); Seeholzer, Reto, 6405 Immensee (CH)
(74) Vertreter: Ventocilla, Abraham

(56) Entgegenhaltungen:
- WO-A-96/32649
- WO-A-97/33154
- DE-A- 4 211 003
- DE-A- 19 630 160
- US-A- 5 559 339

## Beschreibung

Die vorliegende Erfindung betrifft ein Verfahren zur Ueberwachung von Pipettiervorgängen entsprechend dem Oberbegriff von Patentanspruch 1.

Lichtschranken mit Lichtquelle und -empfänger, beispielsweise zum Detektieren von passierenden Gegenständen, sind allgemein bekannt. Es ist weiter bekannt, dass in einem Flüssigkeitsstrahl enthaltene Gasblasen aufgrund ihrer vom Strahl abweichenden optischen Dichte erkennbar sind. Gasblasen in einem Flüssigkeitsstrahl lassen sich daher grundsätzlich mit Hilfe einer geeigneten Lichtschranke detektieren. Eine Einrichtung hierfür ist in der Schrift WO97/33154beschrieben.

Von Analysenautomaten für zu analysierende Flüssigkeiten ist es bekannt, dass diese Flüssigkeiten in kleinen Mengen, beispielsweise in Portionen von minimal 1 bis 2 Mikroliter, durch Einsaugen in und Ausstossen aus Pipettiernadeln gehandhabt werden. Hierbei bildet das Auftreten von Blasen in den Nadeln eine wichtige Quelle von Fehlern, da solche Blasen die Quantitäten der ausgestossenen Flüssigkeiten stark beeinflussen können.

Der Erfindung liegt daher die Aufgabe zugrunde, ein Verfahren der eingangs erwähnten Art bereit zu stellen, mit dem das Einsaugen in und das Ausstossen der Flüssigkeiten aus den Pipettiernadeln von Analysenautomaten zur Vermeidung von Analysenfehlern möglichst genau überwacht werden kann. Im speziellen soll diese Wirkung durch eine berührungslose, optische Einrichtung erfolgen.

Diese Aufgabe wird erfindungsgemäss mit einem Verfahren gelöst, dessen wesentlichen Merkmale im kennzeichnenden Teil des Anspruchs 1 definiert sind. Ausgestaltungen des erfindungsgemässen Verfahrens sind durch die abhängigen Ansprüche definiert.

Die Vorteile, die mit dem erfindungsgemässen Verfahren erzielt werden, liegen insbesondere darin, dass es mit ihrer Hilfe gelingt, in Analysenautomaten Messungen durchzuführen, die wesentlich zuverlässiger sind als bisher, was die Aussagekraft der Messungen erheblich verbessert.

Im folgenden werden Ausführungsbeispiele der Erfindung anhand der beiliegenden Figuren näher beschrieben. Es zeigen:
- Figur 1: den prinzipiellen Aufbau einer Vorrichtung zur Durchführung eines erfindungsgemässen Verfahrens;
- Figur 2: Zeitdiagramme charakteristischer Intensitätssignalverläufe
- Figur 3: ein Blockschaltbild einer Detektorelektronik;
- Figur 4: Intensitätsintegrale; und
- Figur 5: ein Ablaufdiagramm.

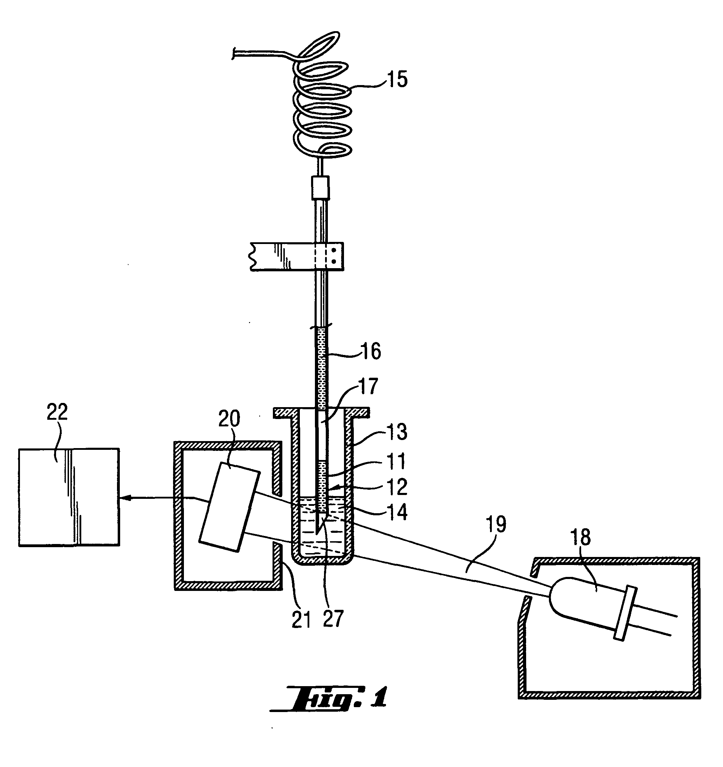

Wie in Fig. 1 gezeigt, befindet sich eine auszustossende (erste) Flüssigkeit 11 in einer Pipettiernadel 12. Diese Nadel ist in ein Küvettengefäss 13 eingeführt und taucht mit ihrer Spitze in eine weitere (zweite) Flüssigkeit 14, der die auszustossende Flüssigkeit 11 beigemischt werden soll. An die Pipettiernadel 12 ist ein flexibler Schlauch 15 angeschlossen, über den das Ansaugen bzw. Ausstossen der Flüssigkeit 11 durch Druckänderung gesteuert wird. Aus der Pipettiernadel 12 wird eine Menge von minimal 1 Mikroliter Probenflüssigkeit 11 ausgestossen.

Oberhalb der im Volumen wohl definierten ersten Flüssigkeit 11 befindet sich zur Abgrenzung von einer (dritten), im Schlauch 15 und dem oberen Bereich der Pipettiernadel 12 konstant verbleibenden, hydraulischen Zwecken dienenden Arbeitsflüssigkeit 16 eine Trennblase 17. In der Spitze der Nadel 12 bis hin zur ersten Flüssigkeit 11 befindet sich eine Schutzblase 27, die die Pipettiernadel 12 gegen aussen quasi verschliesst und damit vor allem ungewolltes Austreten von Teilen der ersten Flüssigkeit 11 verhindert.

Die in Fig. 1 dargestellte Vorrichtung umfasst eine Lichtquelle 18, beispielsweise eine LED (light emitting diode) zum Abgeben eines Lichtstrahls 19 im nahen Infrarot (z.B. bei ca. 900 nm), und einen zugeordneten Lichtdetektor 20. Diesem ist eine Detektorelektronik 22 nachgeschaltet. Der Lichtstrahl 19 durchsetzt das Küvettengefäss 13 und die darin enthaltene Flüssigkeit 14 relativ breit und schräg, wodurch beim Auftreten von Blasen durch Totalreflexionen an den Blasenwänden beim Detektor 20 starke Änderungen der empfangenen Lichtstärke auftreten. Der Detektor 20 ist zur Eliminierung von störender Hintergrundstrahlung durch eine Blende 21 gegen aussen abgeschirmt. Es lassen sich auf diese Weise auch einzelne, kleinste Blasen nachweisen, die aus der Nadel 11 in die zweite Flüssigkeit 14 ausgestossen werden und in dieser langsam aufsteigen.

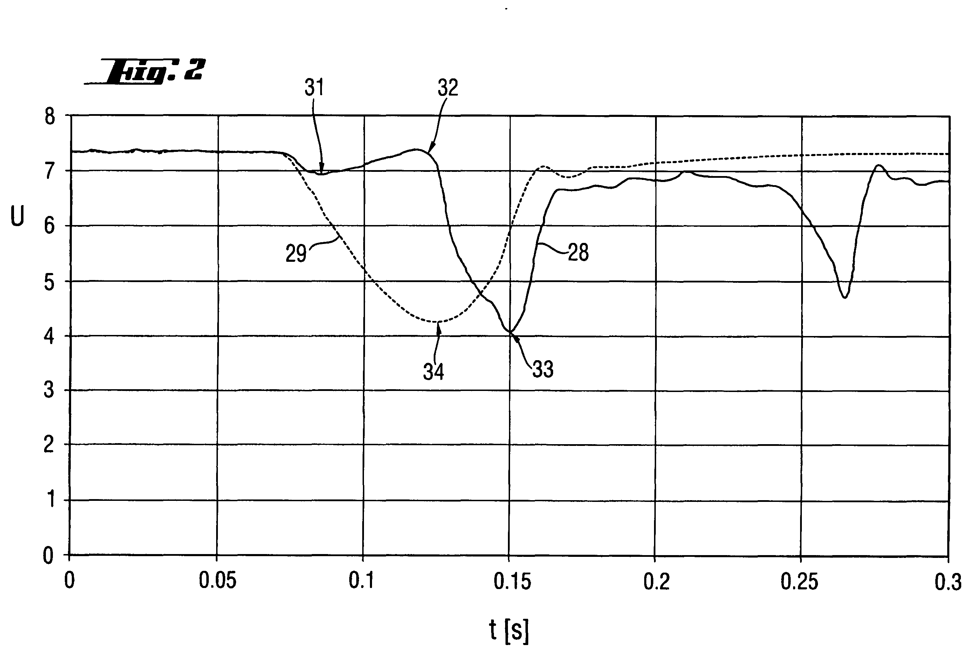

Figur 2 zeigt den typischen Verlauf der Amplitude des Ausgangssignals/Intensitätssignals U des Lichtdetektors 20 in Abhängigkeit von der Zeit t in Sekunden für zwei unterschiedliche Fälle. Im angestrebten Normalfall liegt die geforderte Menge (erste) Flüssigkeit 11 blasenfrei in der Pipettiernadel 12 vor. Die volle Linie 28 zeigt einen Verlauf des Signals U im Fall einer normalen Pipettierung. In diesem Fall zeigt sich nach dem Beginn des Ausstossvorganges ein erstes Minimum 31 geringer Tiefe, welches durch die ausgestossene Schutzblase 27 bewirkt wird. Das nachfolgende, relative Maximum 32 geht auf die ausgestossene erste Flüssigkeit 11 zurück. Sobald diese Flüssigkeit 11 vollständig aus der Pipettiernadel 12 ausgetreten ist, folgt ein Teil der Trennblase 17 nach, die ein zweites, tieferes Minimum 33 bewirkt.

Die gebrochene Linie 29 zeigt einen Verlauf des Ausgangssignals/Intensitätssignals U im zweiten, unerwünschten Fall, bei dem wenig oder sogar keine Flüssigkeit 11, sondern vorwiegend Luft aus der Pipettiernadel 12 in die zweite Flüssigkeit 14 eingebracht wird. In diesem zweiten Fall zeigt sich ein einziges Minimum 34, dessen Tiefe etwa gleich tief wie beim Hauptminimum 33 des ersten Falles ist. In der Praxis ergeben sich beliebige Mischformen zwischen den gezeigten Kurven 28 und 29.

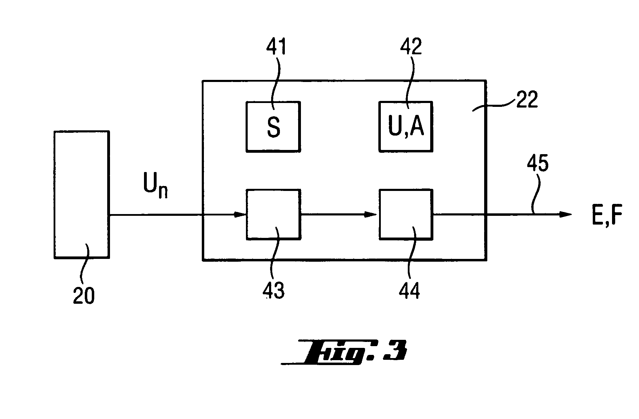

Figur 3 zeigt das Blockschaltbild der Detektorelektronik 22. Diese Einheit 22 umfasst einen ersten Speicher 41 und einen zweiten Speicher 42 sowie zwei Logikkreise43, 44. Sie gibt ein Steuersignal über die Verbindung 45 nach aussen ab und erhält ihre Messsignale Uₙ vom Lichtdetektor 20.

Im Speicher 41 sind Vergleichswerte gespeichert, die den in Figur 2 gezeigten, typischen Intensität/Zeit-Verläufen entsprechen. Diese Vergleichswerte dienen vorzugsweise als Schwellwerte S.

Im Speicher 42 werden die während des Ausstossens der Flüssigkeit 11 aus der Pipettiernadel 12 ermittelten Intensitätswerte bzw. die Messsignale Uₙ (n: fortlaufende Numerierung) laufend gespeichert, so dass jeweils eine Folge von Messwerten für die Bearbeitung bereitsteht. Diese Messwerte Uₙ können zur Vermeidung von statistischen Schwankungen gefiltert sein, beispielsweise durch Mittelwertbildung aus z. B. jeweils fünf benachbarten Einzelwerten.

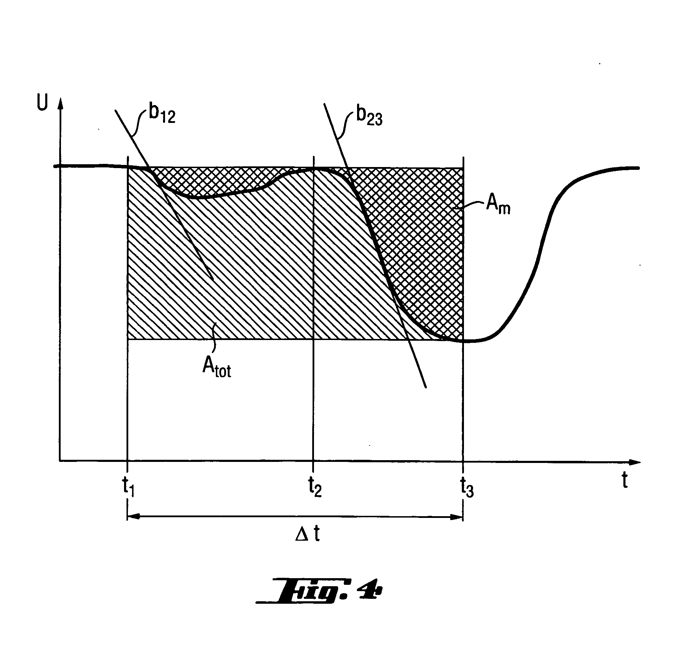

Der erste Logikkreis 43 bildet bevorzugt und fortlaufend aus benachbarten (eventuell gefilterten) Messsignalen Uₙ Differenzwerte dUₙ = Uₙ - Uₙ₋₁. Der Quotient aus diesen Differenzwerten und einem Zeitintervall, d.h. dUₙ/dt, entspricht den jeweiligen Steigungen der Kurven von Figur 2. Aus diesen Steigungen, insbesondere aus deren mittleren Werten und den zeitlichen Einsatzpunkten lassen sich bereits wichtige Schlüsse ziehen. Weiter lassen sich jedoch aus der Folge der Differenzwerte dUₙ auch die Minima und/oder Maxima des jeweiligen Intensität/Zeit-Verlaufes ermitteln und aus den Intensitätswerten selbst die zugeordneten Intensitäten an den Extremstellen. Fig. 4 zeigt z.B. die Steigung b₁₂ für das Minimum, welches zwischen t₁ und t₂ liegt, und die Steigung b₂₃ für das Minimum, welches zwischen t₂ und t₃ liegt, für einen Verlauf der Intensität U gemäss der Kurve 28 in Fig. 2 welcher einer Normalpipettierung entspricht. Die Steigungen und die Werte an den Extremstellen bilden erste Bewertungsdaten Bₘ (m: 1, 2, 3, ...).

Es ist aus der Figur 2 ersichtlich, dass die in Fig. 4 gezeigten Steigungen b₁₂ und b₂₃ im Falle eines Verlaufs der Intensität U gemäss der Kurve 29 in Fig. 2 deutlich andere Werte haben, als die Steigungen b₁₂ und b₂₃ für einen Verlauf der Intensität U gemäss der Kurve 28 in Fig. 2. Wie oben erwähnt, entspricht der Verlauf der Intensität U gemäss der Kurve 29 in Fig. 2 einem unerwünschten Pipettiervorgang, bei dem wenig oder sogar keine Flüssigkeit 11, sondern vorwiegend Luft aus der Pipettiernadel 12 in die zweite Flüssigkeit 14 eingebracht wird.

Zum Gewinnen weiterer Bewertungsdaten dienen Integrale A, d.h. es werden Flächen bestimmt, die im wesentlichen durch die Intensität/Zeit-Verläufe entsprechend Figur 2 begrenzt sind. Hierzu zeigt Figur 4 ein der Figur 2 entsprechendes Schema. Das Integral Am entspricht der Fläche oberhalb der jeweiligen Diagrammkurve, beginnend beim Ausgangspunkt t₁ und endend eine vorgegebene Zeit Δt später beim Endpunkt t₃. Das Integral Aₜₒₜ entspricht der zugeordneten Rechteckfläche, die durch den genannten Punkt t₁ und die Zeit Δt aufgespannt ist. Das Verhältnis Aₘ/Aₜₒₜ dieser jeweiligen Integrale bildet ein weiteres Bewertungsdatum.

Im zweiten Logikkreis 44 werden die Bewertungsdaten jeweils mit den vom ersten Speicher 41 zur Verfügung gestellten Schwellwerten verglichen. Sobald noch zu beschreibende Kriterien erfüllt sind, gibt der Logikkreis 44 über die Verbindung 45 entweder ein Endesignal E oder ein Fehlersignal F ab.

Die Detektorelektronik 22 kann in konventioneller Weise aus Schaltkreisen, z. B. unter Verwendung von Operationsverstärkern, aufgebaut sein. In bevorzugter Art handelt es sich jedoch um einen programmgesteuerten Prozessor samt zugeordnetem Speicher, bei dem die Logikkreise 43, 44 durch spezielle Programmteile, die seriell ablaufen, realisiert sind.

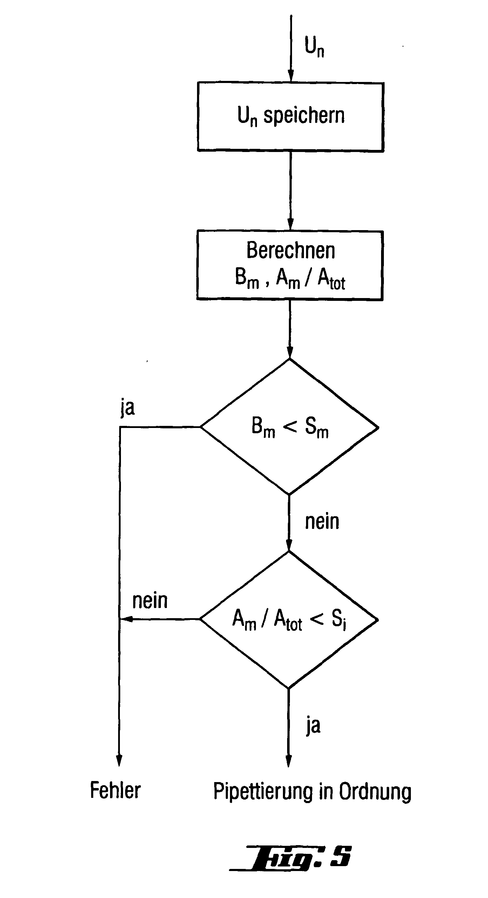

Figur 5 zeigt hierzu ein sehr einfaches Ablaufdiagramm, welches die Gesamtfunktion der Detektorelektronik 22 darstellt. Die vom Detektor 20 abgegebenen Intensitätswerte Uₙ werden als Rohdaten im Speicher 42 gespeichert. Sie dienen in ersten Verarbeitungsschritten zur Berechnung der genannten Bewertungsdaten Bₘ, Aₘ/Aₜₒₜ. Hierauf folgen im wesentlichen zwei Entscheidungsschritte, in denen geprüft wird, ob die ersten Bewertungsdaten Bₘ den durch die gespeicherten Schwellwerte S gegebenen Bedingungen entsprechen oder nicht, und ob das Verhältnis der Integrale Aₘ/Aₜₒₜ einen weiteren Schwellwert Sᵢ nicht übersteigt. Entsprechen die Entscheidungsantworten den Verhältnissen bei einwandfreiem Pipettieren, dann ergibt sich ein positives Endesignal. Anderenfalls kann ein Fehler vorliegen. Auf dieses Ergebnis wird entweder mit einem harten Stoppsignal reagiert oder es wird die Wiederholung des Pipettiervorganges eingeleitet.

Für ein einwandfreies Arbeiten der Vorrichtung zur Durchführung des erfindungsgemässen Verfahrens ist es selbstverständlich, dass die Schwellwerte S mit vergleichbaren Proben einwandfrei vorermittelt werden. Weiter ist ein Nullabgleich notwendig, zumindest nach jedem Initialisierungsvorgang. Hierdurch lassen sich Störfaktoren wie unterschiedliche Volumenmenge der zweiten Flüssigkeit 14, unterschiedliche Transparenz, Brechungsindex und/oder Viskosität der Flüssigkeiten 11 und/oder 14 und des Küvettengefässes 13 eliminieren bzw. wenigstens minimieren.

Die günstigen Eigenschaften des erfindungsgemässen Verfahrens beruhen vor allem auf seinem im wesentlichen dynamischen Prinzip, das in der geschickten Auswertung einer umfangreichen Folge von Messwerten besteht. Weiter ist wichtig, dass auf zwei unterschiedliche Arten von Werten abgestellt wird, zum einen auf die Steigungen dUₙ/dt und zum anderen auf Integrale A. Dies erhöht die Entscheidungsfähigkeit beim Detektieren von eventuellen Fehlern wesentlich.

Es ist offensichtlich, dass zahlreiche Varianten sowohl beim physikalischen Aufbau von Lichtquelle 18 und Lichtdetektor 20 als auch in der Signalverarbeitung durch die Detektorelektronik 22 im Rahmen der beschriebenen Erfindung möglich sind. Diese betreffen z. B. die gewählte Geometrie, die verwendete Lichtwellenlänge bzw. die Wahl und die Ermittlung der zu vergleichenden Daten, das zugrunde liegende Flussdiagramm usw.

Zusammenfassend wurde oben eine Vorrichtung zur Ueberwachung von Pipettiervorgängen und dabei insbesondere des Austretens einer ersten Flüssigkeit 11 aus einer Pipettiernadel 12 , die mit ihrer Spitze in eine zweite Flüssigkeit 14 eingetaucht ist, beschrieben. Diese Vorrichtung enthält eine Quelle 18 für einen Lichtstrahl 19, der quer zur Bahn der ersten Flüssigkeit 11 verläuft, und einen Lichtdetektor 20 am Ende des Lichtstrahls 19 zum Abgeben eines der jeweiligen empfangenen Lichtstärke entsprechenden Ausgangssignals. Der Detektor 20 ist zum laufenden Abgeben von Intensitätssignalen bzw. Messsignalen Uₙ ausgebildet.

Die Vorrichtung enthält ferner einen ersten Speicher 41 für vorermittelte Schwellwerte S, einen zweiten Speicher 42 für die aktuellen Intensitätssignale bzw. Messsignalen Uₙ und für von diesen abgeleitete Bewertungsdaten Bₘ, Aₘ/Aₜₒₜ, und wenigstens ein Logikreis 43, 44 zum Vergleichen der Bewertungsdaten Bₘ, Aₘ/Aₜₒₜ mit den Schwellwerten S und zum Abgeben eines Ergebnissignals E, F.

## Patentansprüche

1. Verfahren zur Ueberwachung von Pipettiervorgängen und dabei insbesondere des Austretens einer ersten Flüssigkeit aus einer Pipettiernadel (12), welche mit ihrer Spitze in eine zweite Flüssigkeit (14) in einem Behälter (13) eingetaucht ist,
**dadurch gekennzeichnet, dass**
die zweite Flüssigkeit (14) mit einem von einer Lichtquelle (18) abgegebenen Lichtstrahl (19) bestrahlt wird,
der Lichtstrahl (19) den Behälter (13) und einen Bereich der zweiten Flüssigkeit (14) durchsetzt, welcher Bereich sich von einer Innenwand zur gegenüberliegenden Innenwand des Behälters erstreckt,
der aus der zweiten Flüssigkeit (14) austretende Lichtstrahl (19) von einem Lichtdetektor (20) empfangen wird, welcher als Ausgangssignal ein Intensitätssignal (U) abgibt, welches der empfangenen Lichtstärke entspricht,
Messwerte des Intensitätssignals (U) fortlaufend gemessen und gespeichert werden, und
aus den gespeicherten Messwerte des Intensitätssignals (U) Bewertungsdaten abgeleitet werden und diese mit vorermittelten Schwellwerten verglichen werden, um ein Ergebnissignal zu erzeugen.

2. Verfahren gemäss Anspruch 1, **dadurch gekennzeichnet, dass** erste der abgeleiteten Bewertungsdaten (Bₘ) Kurvensteigungen im Intensität/Zeit-Diagramm sind.

3. Verfahren gemäss Anspruch 1, **dadurch gekennzeichnet, dass** zweite der abgeleiteten Bewertungsdaten der Quotient aus zwei Integralen (Aₘ/Aₜₒₜ) sind, welchen Integralen zwei Flächen im genannten Intensität/Zeit-Diagramm entsprechen, die durch einen Anfangspunkt (U₁) und ein Zeitintervall (Δt) aufgespannt sind.

4. Verfahren gemäss Anspruch 1, **dadurch gekennzeichnet, dass** Messwerte durch Mittelung der Amplituden von benachbarten Intensitätssignale (Uₙ) gebildet werden.

5. Verfahren gemäss einem der Ansprüche 1-4, **dadurch gekennzeichnet, dass** das Volumen der ausgestossenen ersten Flüssigkeit (11) im Minimum etwa 1 Mikroliter beträgt.

6. Verfahren zur Feststellung des Austretens von Luftblasen mit einer ersten Flüssigkeit aus einer Pipettiernadel (12), welche mit ihrer Spitze in eine zweite Flüssigkeit (14) in einem Behälter (13) eingetaucht ist,
**dadurch gekennzeichnet, dass**
die zweite Flüssigkeit (14) mit einem von einer Lichtquelle (18) abgegebenen Lichtstrahl (19) bestrahlt wird,
der Lichtstrahl (19) den Behälter (13) und einen Bereich der zweiten Flüssigkeit (14) durchsetzt, welcher Bereich sich von einer Innenwand zur gegenüberliegenden Innenwand des Behälters erstreckt,
der aus der zweiten Flüssigkeit (14) austretende Lichtstrahl (19) von einem Lichtdetektor (20) empfangen wird, welcher als Ausgangssignal ein Intensitätssignal (U) abgibt, welches der empfangenen Lichtstärke entspricht,
Messwerte des Intensitätssignals (U) fortlaufend gemessen und gespeichert werden, und
aus den gespeicherten Messwerte des Intensitätssignals (U) Bewertungsdaten abgeleitet werden und diese mit vorermittelten Schwellwerten verglichen werden, um ein Ergebnissignal zu erzeugen.

7. Verfahren gemäss Anspruch 6, **dadurch gekennzeichnet, dass** erste der abgeleiteten Bewertungsdaten (Bₘ) Kurvensteigungen im Intensität/Zeit-Diagramm sind.

8. Verfahren gemäss Anspruch 6, **dadurch gekennzeichnet, dass** zweite der abgeleiteten Bewertungsdaten der Quotient aus zwei Integralen (Aₘ/Aₜₒₜ) sind, welchen Integralen zwei Flächen im genannten Intensität/Zeit-Diagramm entsprechen, die durch einen Anfangspunkt (U₁) und ein Zeitintervall (Δt) aufgespannt sind.

9. Verfahren gemäss Anspruch 6, **dadurch gekennzeichnet, dass** Messwerte durch Mittelung der Amplituden von benachbarten Intensitätssignale (Uₙ) gebildet werden.

10. Verfahren gemäss einem der Ansprüche 6-9, **dadurch gekennzeichnet, dass** das Volumen der ausgestossenen ersten Flüssigkeit (11) im Minimum etwa 1 Mikroliter beträgt.

## Claims

1. A process for monitoring pipetting operations and, in particular, the emergence of a first liquid from a pipetting needle (12), the point of which is immersed in a second liquid (14) in a container (13),
**characterised in that**
the second liquid (14) is irradiated with a light beam (19) emitted by a light source (18),
the light beam (19) passes through the container (13) and through a region of the second liquid (14) that extends from one internal wall to the opposite internal wall of the container,
the light beam (19) emerging from the second liquid (14) is received by a light detector (20) which emits by way of output signal an intensity signal (U) that corresponds to the received luminous intensity,
measured values of the intensity signal (U) are continuously measured and stored, and
evaluation data are derived from the stored measured values of the intensity signal (U), and said data are compared with threshold values ascertained previously, in order to generate a result signal.

2. Process according to Claim 1, **characterised in that** first data items of the derived evaluation data (Bₘ) are curve gradients in the intensity/time diagram.

3. Process according to Claim 1, **characterised in that** second data items of the derived evaluation data are the quotient of two integrals (Aₘ/Aₜₒₜ), to which integrals two areas in the aforementioned intensity/time diagram correspond which are spanned by an initial point (U₁) and a time-interval (Δt).

4. Process according to Claim 1, **characterised in that** measured values are created by averaging the amplitudes of adjacent intensity signals (Uₙ).

5. Process according to one of Claims 1-4, **characterised in that** the volume of the ejected first liquid (11) amounts to a minimum of approximately 1 microlitre.

6. A process for establishing the emergence of air bubbles with a first liquid from a pipetting needle (12), the point of which is immersed in a second liquid (14) in a container (13),
**characterised in that**
the second liquid (14) is irradiated with a light beam (19) emitted by a light source (18),
the light beam (19) passes through the container (13) and through a region of the second liquid (14) that extends from one internal wall to the opposite internal wall of the container,
the light beam (19) emerging from the second liquid (14) is received by a light detector (20) which emits by way of output signal an intensity signal (U) that corresponds to the received luminous intensity,
measured values of the intensity signal (U) are continuously measured and stored, and
evaluation data are derived from the stored measured values of the intensity signal (U), and said data are compared with threshold values ascertained previously, in order to generate a result signal.

7. Process according to Claim 6, **characterised in that** first data items of the derived evaluation data (Bₘ) are curve gradients in the intensity/time diagram.

8. Process according to Claim 6, **characterised in that** second data items of the derived evaluation data are the quotient of two integrals (Aₘ/Aₜₒₜ), to which integrals two areas in the aforementioned intensity/time diagram correspond which are spanned by an initial point (U₁) and a time-interval (Δt).

9. Process according to Claim 6, **characterised in that** measured values are created by averaging the amplitudes of adjacent intensity signals (Uₙ).

10. Process according to one of Claims 6-9, **characterised in that** the volume of the ejected first liquid (11) amounts to a minimum of approximately 1 microlitre.

## Revendications

1. Procédé de contrôle de processus de pipettage et, en particulier, de la sortie d'un premier liquide provenant d'une aiguille de pipettage (12) qui est plongée, par sa pointe, dans un deuxième liquide (14) contenu dans un récipient (13),
**caractérisé en ce que**
- le deuxième liquide (14) est irradié par un faisceau lumineux (19) fourni par une source lumineuse (18),
- le faisceau lumineux (19) traverse le récipient (13) et une zone du deuxième liquide (14), laquelle zone s'étend depuis une paroi intérieure jusqu'à la paroi intérieure opposée du récipient,
- le faisceau lumineux (19) sortant du deuxième liquide (14) est capté par un détecteur de lumière (20) qui fournit un signal d'intensité (U) servant de signal de sortie qui correspond à l'intensité lumineuse captée,
- des valeurs mesurées du signal d'intensité (U) sont mesurées et mémorisées en continu, et
- des données d'évaluation sont déduites des valeurs mesurées et mémorisées du signal d'intensité (U) et ces données d'évaluation sont comparées à des valeurs de seuil prédéterminées, pour produire un signal de résultat.

2. Procédé selon la revendication 1,
**caractérisé en ce que** des premières données parmi les données d'évaluation déduites (Bₘ) sont des pentes de courbes du diagramme du rapport intensité / temps.

3. Procédé selon la revendication 1,
**caractérisé en ce que** des deuxièmes données parmi les données d'évaluation déduites sont le quotient de deux intégrales (Aₘ/Aₜₒₜ), intégrales auxquelles correspondent deux surfaces dans ledit diagramme du rapport intensité / temps, lesquelles surfaces sont matérialisées par un point de départ (U₁) et par un intervalle de temps (Δt).

4. Procédé selon la revendication 1,
**caractérisé en ce que** des valeurs mesurées sont obtenues par un calcul de la moyenne des amplitudes de signaux d'intensité voisins (Uₙ) .

5. Procédé selon l'une quelconque des revendications 1 à 4, **caractérisé en ce que** le volume du premier liquide expulsé (11) est au minimum à peu près égal à 1 microlitre.

6. Procédé permettant de constater la formation de bulles d'air avec un premier liquide sortant d'une aiguille de pipettage (12) qui est plongée, par sa pointe, dans un deuxième liquide (14) contenu dans un récipient (13),
**caractérisé en ce que**
- le deuxième liquide (14) est irradié par un faisceau lumineux (19) fourni par une source lumineuse (18),
- le faisceau lumineux (19) traverse le récipient (13) et une zone du deuxième liquide (14), laquelle zone s'étend depuis une paroi intérieure jusqu'à la paroi intérieure opposée du récipient,
- le faisceau lumineux (19) sortant du deuxième liquide (14) est capté par un détecteur de lumière (20) qui fournit un signal d'intensité (U) servant de signal de sortie qui correspond à l'intensité lumineuse captée,
- des valeurs mesurées du signal d'intensité (U) sont mesurées et mémorisées en continu, et
- des données d'évaluation sont déduites des valeurs mesurées et mémorisées du signal d'intensité (U) et ces données d'évaluation sont comparées à des valeurs de seuil prédéterminées, pour produire un signal de résultat.

7. Procédé selon la revendication 6,
**caractérisé en ce que** des premières données parmi les données d'évaluation déduites (Bₘ) sont des pentes de courbes du diagramme du rapport intensité / temps.

8. Procédé selon la revendication 6,
**caractérisé en ce que** des deuxièmes données parmi les données d'évaluation déduites sont le quotient de deux intégrales (Aₘ/Aₜₒₜ), intégrales auxquelles correspondent deux surfaces dans ledit diagramme du rapport intensité / temps, lesquelles surfaces sont matérialisées par un point de départ (U₁) et par un intervalle de temps (Δt).

9. Procédé selon la revendication 6,
**caractérisé en ce que** des valeurs mesurées sont obtenues par un calcul de la moyenne des amplitudes de signaux d'intensité voisins (Uₙ).

10. Procédé selon l'une quelconque des revendications 6 à 9, **caractérisé en ce que** le volume du premier liquide expulsé (11) est au minimum à peu près égal à 1 microlitre.
